(19) Europäisches Patentamt

European Patent Office

Office européen des brevets

(11) **EP 1 315 060 B1**

(12) **EUROPÄISCHE PATENTSCHRIFT**

(45) Veröffentlichungstag und Bekanntmachung des Hinweises auf die Patenterteilung:
**25.01.2006 Patentblatt 2006/04**

(51) Int Cl.:
***G05D 16/20*** *(2006.01)*

(21) Anmeldenummer: **01127945.2**

(22) Anmeldetag: **23.11.2001**

(54) **Verfahren zur kontinuierlichen Regelung einer Stellung eines Stellventils**

Method for continuously regulating the position of a control valve

Procédé de régulation continue de la position d'une soupape de régulation

(84) Benannte Vertragsstaaten:
**CH DE ES FR GB IT LI**

(43) Veröffentlichungstag der Anmeldung:
**28.05.2003 Patentblatt 2003/22**

(73) Patentinhaber: **SIEMENS AKTIENGESELLSCHAFT 80333 München (DE)**

(72) Erfinder:
• **Lehnst, Reinhard**
  **45473 Mülheim (DE)**
• **Schlehuber, Rudolf**
  **46145 Oberhausen (DE)**
• **Zimmer, Gerta, Dr.**
  **45479 Mülheim (DE)**

(56) Entgegenhaltungen:
**EP-A- 0 957 418          GB-A- 1 028 345**
**US-A- 6 142 163          US-B1- 6 178 997**

## Beschreibung

Die Erfindung betrifft ein Verfahren zur kontinuierlichen Regelung einer Stellung eines Stellventils, insbesondere eines Stellventils als Teil einer Prozessregelung oder - steuerung, wobei eine Regelabweichung von einer als Regelgröße ermittelten Stellung des Stellventils zu einer Führungsgröße bestimmt wird, aus der Regelabweichung eine Stellgröße ermittelt wird, mittels derer das Stellventil in der durch die Führungsgröße vorgegebenen Stellung positioniert und/oder gehalten wird.

Im Stand der Technik sind Prozesse zur Erzeugung von Energie aus Wasserdampf mittels Turbinen bekannt, bei denen der Dampf von einem Zwischenüberhitzer zu einem Turbinensatz, beispielsweise bestehend aus einer Mitteldruckturbine mit nachgeschalteten Niederdruckturbinen, geleitet wird, wobei die Turbinen auf einer gemeinsamen Welle angeordnet sind. Um die Turbinen in einem definierten beziehungsweise optimalen Betriebszustand betreiben zu können, sind parallel zu dem Turbinensatz Umleitstellventile mit einer Stellungsregelung vorgesehen. Derartige Stellventile weisen in der Regel einen elektrohydraulischen Antrieb auf.

Ein Verfahren zur Regelung von Drücken ist in der GB 1 028 345 dargestellt. In diesem Dokument wird ein Gerät zur Regelung des Druckes eines Arbeitsmediums beschrieben, wobei das Medium derart erwärmt wird, dass ein Phasenübergang von einer flüssigen Phase zu einer dampfförmigen Phase erfolgt. Der Ausgang des Gerätes ist von der Zeit und von der Temperatur des Arbeitsmediums abhängig, wobei ein Proportionalanteil kleiner wird, wenn die Temperatur des Arbeitsmediums größer wird.

Die Stellungsregelung positioniert das Stellventil entsprechend einem von einer Regelung vorgegebenen Soll-Wert (Führungsgröße). Ein für diese Regelung erforderlicher Ist-Wert (erfasste Regelgröße) wird von einem Ventilstellungsgeber mit einem analogen Weg-Messumformer bereitgestellt.

Einer Regeldifferenz des Ist-Wertes zum Soll-Wert wird gemäß einer vorgegebenen Regelcharakteristik ein Stellwert (Stellgröße) zugeordnet, mit dem über den elektrohydraulischen Antrieb das Stellventil in der vorgegebenen Stellung positioniert wird.

Bei langen angeschlossenen Rohrleitungen zeigt sich eine Schwingungsneigung des Systems, wobei an den Ventilen entsprechende Schwingungsbelastungen auftreten. Dies führt bei einem in einem Stellventil angeordneten Ventilstellungsgeber zu einer hohen mechanischen Beanspruchung, die bei dem betroffenen Ventilstellungsgeber eine hohe Ausfallrate nach sich zieht. Bei derzeitigen leittechnischen Ausführungen bewirkt der Ausfall des Ventilstellungsgebers ein Schließen des Umleitstellventils und damit einen Ausfall des Stellungsregelungskreises.

Der Erfindung liegt daher die Aufgabe zugrunde, ein bekanntes Verfahren zur Regelung der Stellung eines Ventils dahingehend zu verbessern, dass ein Ausfall eines Ventilstellungsgebers keinen Ausfall des Stellungsregelungskreises zur Folge hat.

Dazu wird mit der Erfindung vorgeschlagen, dass die der Stellung des Stellventils entsprechende Regelgröße durch Beobachten der Stellgröße und zumindest einer weiteren durch die Stellung des Stellventils beeinflussbaren Größe ermittelt wird.

Unter "Beobachten" ist hier eine regelungstechnische Definition zu verstehen, nach der ein System vollständig beobachtbar heißt, wenn der Anfangszustand eines Systems aus dem über einem endlichen Intervall bekannten Verlauf der Eingangsgröße und der Ausgangsgröße bestimmt werden kann (siehe Jan Lunze, Regelungstechnik 2, Definition 3.2 oder auch Otto Föllinger, Regelungstechnik, 5. Auflage, Definition 11.109).

Vorteilhaft kann auf einen Ventilstellungsgeber für das Stellventil vollständig verzichtet werden. Bauteile und Kosten, insbesondere auch für Wartung und Instandhaltung, können reduziert beziehungsweise vermieden werden. Mit der erfindungsgemäßen Lösung kann ein hohes Maß an Genauigkeit und Zuverlässigkeit erreicht werden. Darüber hinaus kann beispielsweise bei einer Nachrüstung in einer Anlage der Beobachter wahlweise parallel zu einem Ventilstellungsgeber verwendet werden. Im Falle einer Fehlfunktion des Ventilstellungsgebers kann die für die Regelung erforderliche Regelgröße, durch Beobachten unabhängig von der Funktion des Ventilstellungsgebers ermittelt werden. Ein hohes Maß an Zuverlässigkeit und Genauigkeit kann erreicht werden. Die erfindungsgemäße Lösung kann grundsätzlich in Regelkreisen eingesetzt werden, wobei ein Ventilstellungssollwert als Führungsgröße entweder fest vorgegeben oder auch durch einen überlagerten Regelkreis, beispielsweise einem Druckregelkreis, vorgegeben sein kann.

Ferner wird vorgeschlagen, dass durch Beobachten der Stellgröße und einem jeweils vor und hinter dem Stellventil erfassten Druck die der Stellung des Stellventils entsprechende Regelgröße ermittelt wird. Vorteilhaft können bereits vorhandene, für die Prozesssteuerung oder -regelung ohnehin erforderliche Messstellen verwendet werden, um die Regelgröße zu ermitteln.

Zusätzlich wird vorgeschlagen, dass die Führungsgröße von einer überlagerten Regelung, insbesondere einer Druckregelung, vorgegeben wird. So kann eine Ventilstellung von einer überlagerten Regelung vorgegeben werden, wobei ein Erreichen und Halten der vorgegebenen Stellung von einer ansonsten unabhängigen Regelung bewirkt wird. Insbesondere kann dies bei großtechnischen Anlagen ermöglichen, mittels einer lokal angeordneten Regelung eine von einer entfernten Zentrale vorgegebenen Ventilstellung schnell und störungsarm zu erreichen und/oder zu halten. Darüber hinaus wird vorgeschlagen, dass die Regelung vorteilhaft ein Proportionalverhalten aufweist.

Daneben wird vorgeschlagen, dass die ermittelte Stellung des Stellventils angezeigt wird. Der beobachtete Messwert der Ventilstellung kann angezeigt werden, ohne daß weitere Meßmittel erforderlich wären. Der Messwert kann auch an eine übergeordnete Regelung oder an eine Zentrale übermittelt werden.

Vorteilhaft ist ein Massenstrom zum jeweiligen Druck proportional. Darüber hinaus wird vorgeschlagen, dass über dem Stellventil ein überkritisches Druckgefälle vorliegt.

Um eine explizit bekannte Ventilstellgröße zu erhalten, die sich in einer Form auf die resultierende Ventilbewegung auswirkt, die nicht vom aktuellen Ventilhub abhängt, wird vorgeschlagen, dass eine Regelung affin ist.

Es wird weiter vorgeschlagen, dass ein Wert der Führungsgröße (4) in einem Bereich von ungefähr -10% bis 110% ist. Vorteilhaft können die Endlagen des Stellventils definiert angefahren werden.

Um Eingriffsmöglichkeiten in die Regelung zu schaffen, wird vorgeschlagen, dass die Stellgröße auf einen Auswahlschalter geführt wird. So kann erreicht werden, dass das Stellventil beispielsweise für Testzwecke mit einem vorgegeben Stellwert beaufschlagt wird. Die Stellgröße kann über den Auswahlschalter auf einen maximalen oder auf einen minimalen Wert geschaltet werden, um beispielsweise den maximalen und/oder minimalen Hub zu ermitteln.

Darüber hinaus wird vorgeschlagen, dass als Regelgröße wahlweise auch ein erfasster Messwert eines Ventilstellungsgebers verwendet wird. So kann beispielsweise für Prüfzwecke zwischen einer direkten und einer beobachteten Ermittlung der Ventilstellung gewählt werden.

Ferner wird vorgeschlagen, dass ein Messwert des Ventilstellungsgebers zum Kalibrieren des sogenannten Beobachters, die Vorrichtung, die durch Beobachten der genannten Größen die Stellung des Stellventils ermittelt, verwendet wird. Vorteilhaft kann eine direkt gemessene Ventilstellung herangezogen werden, um den Beobachter mit seinen Parametern einzustellen, so dass eine Abweichung zur Regelung mittels Ventilstellungsgeber in einem für den Ventilstellungsgeber günstigen Betriebszustand möglichst gering wird.

Es wird weiterhin vorgeschlagen, dass das Stellventil über einen elektrohydraulischen Antrieb in der durch die Führungsgröße vorgegebenen Stellung positioniert und/oder gehalten wird. Vorteilhaft können Stellventile für hohe Anforderungen verwendet werden. Stelleigenschaften des Systems aus Stellventil und elektrohydraulischem Antrieb können bei der Regelcharakteristik berücksichtigt werden, so dass eine schnelle, stabile Regelung unter Vermeidung der beispielsweise durch Schwingungen oder auch Korrosion erzeugten Fehler erfolgen kann.

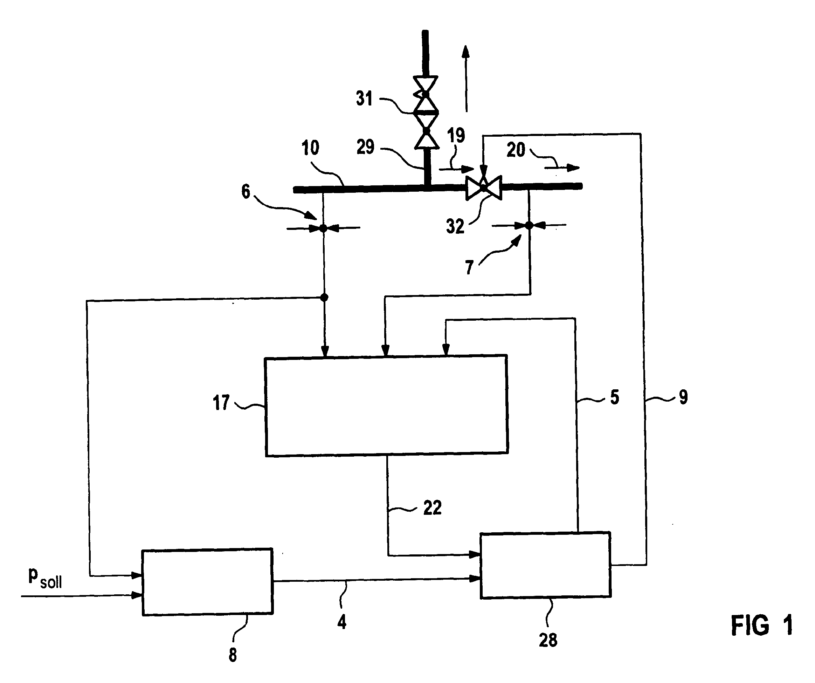

Weitere Einzelheiten, Merkmale und Vorteile der Erfindung sind der folgenden Beschreibung eines Ausführungsbeispiels zu entnehmen. Im wesentlichen gleichbleibende Bauteile sind mit den gleichen Bezugszeichen bezeichnet. Ferner wird bezüglich gleicher Merkmale und Funktionen auf die Beschreibung des Ausführungsbeispiels in Fig. 1 verwiesen.

Es zeigen:

Fig. 1     einen Ausschnitt eines Anlagenschemas zur Regelung eines Turbinensatzes,

Fig. 2     ein Blockschema für eine Regelung eines Stellventils mit einem erfindungsgemäßen Beobachter und

Fig. 3     ein Blockschema für den erfindungsgemäßen Beobachter.

Fig. 1 stellt einen Ausschnitt aus einem Anlagenschema einer aus Wasserdampf Energie erzeugenden Anlage dar. Ober eine Leitung 10 wird ein Wasserdampfgasstrom über eine Verzweigung 29 auf Ventile 31, 32 geführt.

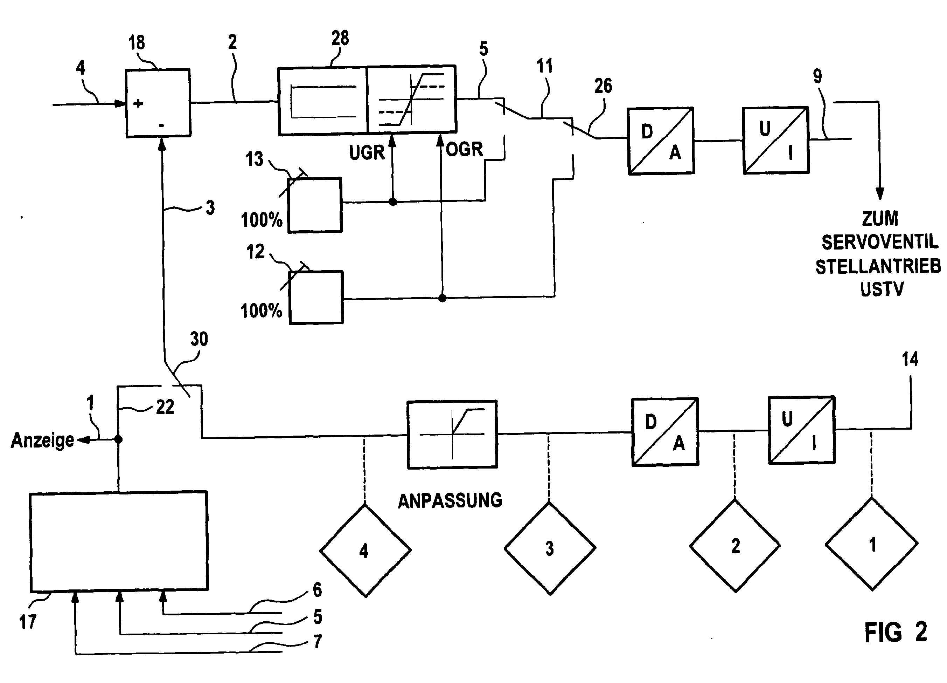

Ferner zeigt Fig. 1 einen Beobachter 17, der mit einer in Strömungsrichtung vor den Stellventilen 31, 32 angeordneten Druckmessstelle 6 und mit einer in Strömungsrichtung hinter dem Stellventil 32 angeordneten Druckmessstelle 7 verbunden ist. Der Massenstrom ist proportional zur jeweiligen Druckdifferenz, wobei über dem Stellventil 32 ein überkritisches Druckgefälle vorliegt. Weiterhin erhält der Beobachter 17 die Stellgröße 5 von einem Stellungsregler 28 als Eingangssignal. Aus diesen drei Eingangsgrößen ermittelt der Beobachter 17 den IST-Wert 22 der Ventilstellung des Stellventils 32. Das Signal wird an einem Stellungsregler 28 bereitgestellt, der die Regelabweichung 2 zu einer Führungsgröße 4 ermittelt, aus der der Stellungsregler 28 die Stellgröße 5 für das Stellventil 32 erzeugt. Die Führungsgröße 4 kann Werte zwischen -10% und 110% annehmen, um definiertes Anfahren der Endlagen des Stellventils 32 zu ermöglichen. Über den Auswahlschalter 30 kann optional auch der von einem nicht näher dargestellten Ventilstellungsgeber gelieferte Ist-Wert 14 für die Regelung ausgewählt werden (Fig. 2). Als Regelung ist eine affine Regelung vorgesehen.

Fig. 2 zeigt ein Blockschema für ein Verfahren zur kontinuierlichen Regelung einer Stellung des Stellventils 32 als Teil einer Prozessregelung, wobei von einem Vergleicher 18 eine Regelabweichung 2 von einer als Regelgröße 3 ermittelten Stellung des Stellventils 32 zur Führungsgröße 4 bestimmt wird, aus der Regelabweichung 2 eine Stellgröße 5 ermittelt wird, mittels derer das Stellventil 32 in der durch die Führungsgröße 4 vorgegebenen Stellung positioniert und/oder gehalten wird. Erfindungsgemäss wird die der Stellung des Stellventils 32 entsprechende Regelgröße 3 durch Beobachten der Stellgröße 5 und zwei weiterer durch die Stellung des Stellventils 32 beeinflussbaren Größen 6, 7 ermittelt, die in dieser Ausgestaltung durch einen jeweils vor und hinter dem Stellventil 32 erfassten Druck 6, 7 gebildet werden.

Die Führungsgröße 4 wird von einer überlagerten Druckregelung 8 vorgegeben. Der Stellungsregler 28 ist durch ein Proportionalverhalten gekennzeichnet. Über ein Anzeigesignal 1 einer nicht näher dargestellten Anzeige wird die ermittelte Stellung des Stellventils 32 angezeigt. Ferner wird eine Stellgrößen 9 erzeugt, um eine Spule eines nicht näher dargestellten elektrohydraulischen Antriebs des Stellventils 32 anzusteuern.

Die Stellgröße 5 wird auf einen Auswahlschalter 11 geführt, mit dem optional der untere Grenzwert 13 als Stellgröße ausgewählt werden kann. Nachfolgend ist ein Umschalter 26 vorgesehen, mit dem optional der obere Grenzwert 12 als Stellgröße ausgewählt werden kann.

Zur Funktion des Beobachters 17 sei an dieser Stelle noch einmal kurz auf dessen grundlegende Funktion eingegangen. Als bekannt, weil messtechnisch verfügbar, werden die Drücke 6, 7 vor und hinter dem Stellventil 32 als Ausgangsgrößen sowie dessen Stellgröße 5 als Eingangsgröße in Form einer elektrischen Spannung angesehen. Aus den zeitlichen Verläufen lässt sich der Anfangszustand, hier das Signal 22 für die Stellung des Stellventils 32, bestimmen (siehe hierzu insbesondere Jan Lunze).

Im einzelnen wird die Ventilstellung unter Verwendung der vor und hinter dem Stellventil 32 gemessenen Drücke 6, 7 sowie der der Ventilstellung entsprechenden Spannung 9 als Stellgröße 5 mit Hilfe des Beobachters 17 ermittelt. In dieser Ausgestaltung ist die Stellungsänderung des Stellventils 32 proportional zur anliegenden Spannung 9. Daneben ist jedoch auch eine Ausführung denkbar, bei der die Stellung des Stellventils 32 selbst proportional zur anliegenden Spannung 9 ist.

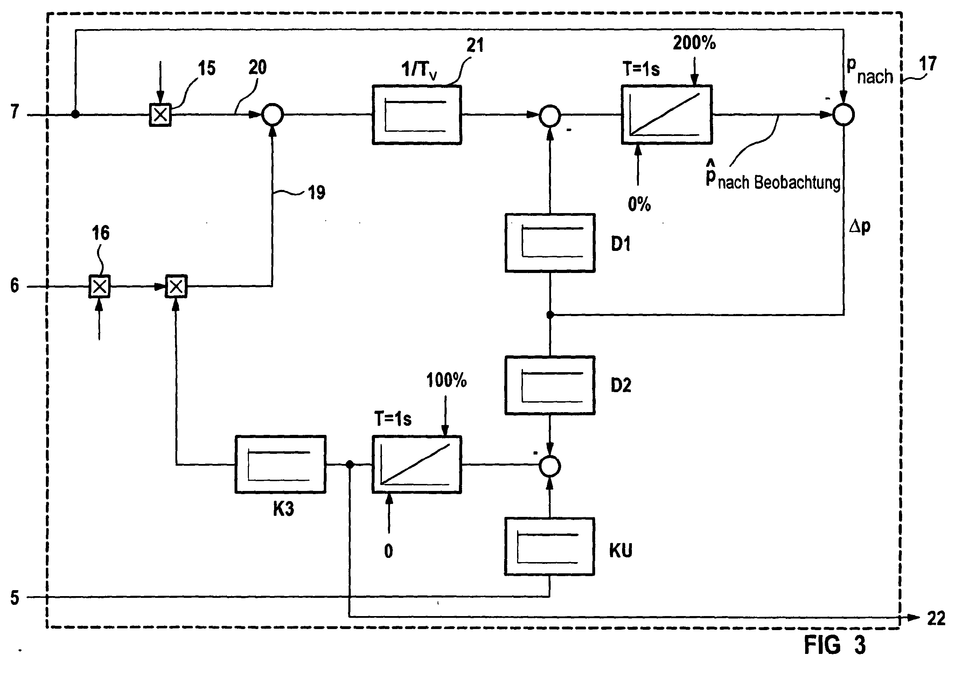

Der Druck 7 hinter dem Stellventil 32 hängt von den ein- und ausströmenden Dampfmassenströmen 19, 20 ab (Fig. 3). Die Druckänderung ist über die volumenabhängige Speicherzeitkonstante 21 proportional zur Differenz aus den Massenströmen 19, 20. Unter der Voraussetzung eines überkritischen Druckgefälles ist die in den Raum hinter dem Stellventil 32 einströmende Dampfmasse 19 proportional zu dem Produkt aus der Ventilstellung und dem Druck 6 vor dem Stellventil 32. Die ausströmende Dampfmasse 20 ist in erster Linie proportional zu dem im durch die Rohrleitung gebildeten, nicht näher dargestellten Speicherraum aufgebauten Druck 7. Dies wird durch die Multiplizierer 15, 16 abgebildet.

Das hier darzustellende System lässt sich durch ein Differentialgleichungssystem mit gekoppelten Differentialgleichungen abbilden.

$$\frac{d}{dt}\begin{pmatrix} h_v \\ p_{nach} \end{pmatrix} = \frac{1}{T_v}\begin{pmatrix} 0 & 0 \\ K_1 p_{vor} & -K_2 \end{pmatrix} \begin{pmatrix} h_v \\ p_{nach} \end{pmatrix} + \begin{pmatrix} K_u \\ 0 \end{pmatrix} U_v$$

$h_v =$ Ventilstellung

$P_{nach} =$ hinter dem Stellventil aufgebauter Druck

$T_v =$ Volumenzeitkonstante

$K_{U,1,2} =$ Parameter

$P_{vor} =$ Druck vor dem Stellventil

$U_v =$ Spannung am Stellventil (Stellgröße)

Mit dem Beobachter 17 wird die Dynamik der Systemgleichungen nachgebildet. Zusätzlich zu den Gleichungen des Originalsystems enthält der Beobachter 17 eine Rückführung der Differenz zwischen gemessenem und beobachtetem Druck 7. Der Beobachter 17 wird durch die Gleichungen

$$\frac{d}{dt}\begin{pmatrix} h'_v \\ p'_{nach} \end{pmatrix} = \frac{1}{T_v}\begin{pmatrix} 0 & 0 \\ K_1 p_{vor} & -K_2 \end{pmatrix} \begin{pmatrix} h'_v \\ p'_{nach} \end{pmatrix} + \begin{pmatrix} K_u \\ 0 \end{pmatrix} U_v + \begin{pmatrix} d_1 \\ d_2 \end{pmatrix} (p_{nach} - p'_{nach})$$

beschrieben. Die gestrichenen Größen sind Beobachterzustände.

Die Parameter $d_1$ und $d_2$ sind so zu wählen, dass die Differenzengleichung für den Fehler

$$\begin{pmatrix} \Delta h \\ \Delta p \end{pmatrix} = \begin{pmatrix} h_v \\ p_{nach} \end{pmatrix} - \begin{pmatrix} h'_v \\ p'_{nach} \end{pmatrix}$$

im Ursprung (0, 0) stabil ist. Daraus ergibt sich das Differntialgleichungssystem

$$\frac{d}{dt}\begin{pmatrix}\Delta h \\ \Delta p\end{pmatrix} = \begin{pmatrix} 0 & -d_1 \\ \dfrac{K_1 p_{vor}}{T_v} & -\dfrac{K_2}{T_v} - d_2 \end{pmatrix}\begin{pmatrix}\Delta h \\ \Delta p\end{pmatrix}$$

welches stabil ist, wenn das zugehörige charakteristische Polynom nur komplexe Nullstellen mit einem Realteil kleiner als Null aufweist. Daraus folgt für die Parameter $d_1$ und $d_2$:

$$d_2 > K_2 \,/\, T_v \text{ und } d_1 > 0.$$

Für die Parameter werden in diesem Ausführungsbeispiel folgende Werte angegeben:

$K_1$ = 2,3
$K_2$ = 4,55
$K_3$ = 0,01
$T_v$ = 0, 1
$d_1$ = 1
$d_2$ = 0,02
$K_u$ = 0,5 (Ersteinstellung)

Die in den Figuren dargestellten Ausführungsbeispiele dienen lediglich der Erläuterung der Erfindung und sind für diese nicht beschränkend. So können insbesondere einzelne Verfahrensschritte, wie die Auswahl der durch die Stellung des Stellventils beeinflussbaren Größe, beispielsweise Massenstrom, als auch die zusätzlichen Funktionen wie des Umschaltens der Stellgrößen, usw. variieren.

**Patentansprüche**

1.  Verfahren zur kontinuierlichen Regelung einer Stellung eines Stellventils (32), insbesondere eines Stellventils als Teil einer Prozessregelung oder -steuerung, wobei eine Regelabweichung (2) von einer als Regelgröße (3) ermittelten Stellung des Stellventils zu einer Führungsgröße (4) bestimmt wird, aus der Regelabweichung (2) eine Stellgröße (5) ermittelt wird, mittels derer das Stellventil (32) in der durch die Führungsgröße (4) vorgegebenen Stellung positioniert und/oder gehalten wird, **dadurch gekennzeichnet, dass** die der Stellung des Stellventils (32) entsprechende Regelgröße (3) durch Beobachten der Stellgröße (5) und zumindest einer weiteren durch die Stellung des Stellventils (32) beeinflussbaren Größe (6, 7) ermittelt wird.

2.  Verfahren nach Anspruch 1, **dadurch gekennzeichnet, dass** durch Beobachten der Stellgröße (5) und einem jeweils vor und hinter dem Stellventil (32) erfassten Druck (6, 7) die der Stellung des Stellventils (32) entsprechende Regelgröße (3) ermittelt wird.

3.  Verfahren nach Anspruch 1 oder 2, **dadurch gekennzeichnet, dass** die Führungsgröße (4) von einer überlagerten Regelung (8), insbesondere einer Druckregelung, vorgegeben wird.

4.  Verfahren nach einem der vorhergehenden Ansprüche, **gekennzeichnet durch** ein Proportionalverhalten.

5.  Verfahren nach einem der vorhergehenden Ansprüche, **dadurch gekennzeichnet, dass** die ermittelte Stellung des Stellventils (32) angezeigt wird.

6.  Verfahren nach einem der vorhergehenden Ansprüche, **gekennzeichnet durch** einen zum jeweiligen Druck proportionalen Massenstrom.

7.  Verfahren nach einem der vorhergehenden Ansprüche, **gekennzeichnet durch** ein überkritisches Druckgefälle über dem Stellventil (32).

8.  Verfahren nach einem der vorhergehenden Ansprüche, **gekennzeichnet durch** eine affine Regelung.

**9.** Verfahren nach einem der vorhergehenden Ansprüche, **gekennzeichnet durch** einen Wert der Führungsgröße (4) in - einem Bereich von ungefähr -10% bis 110%.

**10.** Verfahren nach einem der vorhergehenden Ansprüche, **dadurch gekennzeichnet, dass** die Stellgröße (5) auf zumindest einen Auswahlschalter (11) geführt wird.

**11.** Verfahren nach Anspruch 10, **dadurch gekennzeichnet, dass** die Stellgröße (9, 10) über den Auswahlschalter (11) auf einen maximalen oder auf einen minimalen Wert (12, 13) geschaltet wird.

**12.** Verfahren nach einem der vorhergehenden Ansprüche, **dadurch gekennzeichnet, dass** als Regelgröße (3) wahlweise auch ein erfasster Messwert (14) eines Ventilstellungsgebers verwendet wird.

**13.** Verfahren nach einem der vorhergehenden Ansprüche, **dadurch gekennzeichnet, dass** ein Messwert (14) des Ventilstellungsgebers zum Kalibrieren des Beobachters (17) verwendet wird.

**14.** Verfahren nach einem der vorhergehenden Ansprüche, **dadurch gekennzeichnet, dass** das Stellventil (32) über einen elektrohydraulischen Antrieb in der durch die Führungsgröße (4) vorgegebenen Stellung positioniert und/oder gehalten wird.

**Claims**

**1.** Method for the continuous control of a position of a control valve (32), in particular a control valve as part of a closed-loop or open-loop process control system, a control deviation (2) from a position of the control valve, determined as controlled variable (3), in relation to a reference variable (4) being determined, a manipulated variable (5) being determined from the control deviation (2), by means of which manipulated variable (5) the control valve (32) is positioned and/or maintained in the position predefined by the reference variable (4), **characterized in that** the controlled variable (3) corresponding to the position of the control valve (32) is determined by observing the manipulated variable (5) and at least one further variable (6, 7) that can be influenced by the position of the control valve (32).

**2.** Method according to Claim 1, **characterized in that** the controlled variable (3) corresponding to the position of the control valve (32) is determined by observing the manipulated variable (5) and a pressure (6, 7) registered respectively upstream and downstream of the control valve (32) .

**3.** Method according to Claim 1 or 2, **characterized in that** the reference variable (4) is predefined by a higher-order control system (8), in particular a pressure control system.

**4.** Method according to one of the preceding claims, **characterized by** a proportional behaviour.

**5.** Method according to one of the preceding claims, **characterized in that** the determined position of the control valve (32) is indicated.

**6.** Method according to one of the preceding claims, **characterized by** a mass flow proportional to the respective pressure.

**7.** Method according to one of the preceding claims, **characterized by** a supercritical pressure drop across the control valve (32).

**8.** Method according to one of the preceding claims, **characterized by** an affine control system.

**9.** Method according to one of the preceding claims, **characterized by** a value of the reference variable (4) in a range from approximately -10% to 110%.

**10.** Method according to one of the preceding claims, **characterized in that** the manipulated variable (5) is led to at least one selection switch (11).

**11.** Method according to Claim 10, **characterized in that** the manipulated variable (9, 10) is switched to a maximum or to a minimum value (12, 13) via the selection switch (11).

**12.** Method according to one of the preceding claims, **characterized in that** the controlled variable (3) optionally used is also a registered measured value (14) from a valve position transmitter.

**13.** Method according to one of the preceding claims, **characterized in that** a measured value (14) from the valve position transmitter is used to calibrate the observer (17).

**14.** Method according to one of the preceding claims, **characterized in that** the control valve (32) is positioned and/or maintained in the position predefined by the reference variable (4) by an electrohydraulic drive.

**Revendications**

**1.** Procédé de régulation continue d'une position d'une vanne de régulation (32), notamment d'une vanne de régulation en tant que partie d'une régulation ou commande de processus, dans lequel on détermine un écart de régulation (2) entre une position de vanne de régulation déterminée comme grandeur réglée (3) et une grandeur de commande (4) et on détermine à partir de l'écart de régulation (2) une grandeur réglante (5) au moyen de laquelle la vanne de régulation (32) est mise et/ou maintenue dans la position prescrite par la grandeur de commande (4), **caractérisé par le fait qu'**on détermine la grandeur réglée (3) correspondant à la position de la vanne de régulation (32) en observant la grandeur réglante (5) et au moins une autre grandeur (6, 7) pouvant être influencée par la position de la vanne de régulation (32).

**2.** Procédé selon la revendication 1, **caractérisé par le fait que**, en observant la grandeur réglante (5) et une pression (6, 7) acquise respectivement devant et derrière la vanne de régulation (32), on détermine la grandeur réglée (3) correspondant à la position de la vanne de régulation (32).

**3.** Procédé selon la revendication 1 ou 2, **caractérisé par le fait que** la grandeur de commande (4) est prescrite par une régulation (8) de rang supérieur, notamment une régulation de pression.

**4.** Procédé selon l'une des revendications précédentes, **caractérisé par** une caractéristique proportionnelle.

**5.** Procédé selon l'une des revendications précédentes, **caractérisé par le fait qu'**on affiche la position déterminée de la vanne de régulation (32).

**6.** Procédé selon l'une des revendications précédentes, **caractérisé par** un flux massique proportionnel à la pression respective.

**7.** Procédé selon l'une des revendications précédentes, **caractérisé par** une chute de pression surcritique à la vanne de régulation (32).

**8.** Procédé selon l'une des revendications précédentes, **caractérisé par** une régulation affine.

**9.** Procédé selon l'une des revendications précédentes, **caractérisé par** une valeur de la grandeur de commande (4) dans une plage allant environ de - 10 % à 110 %.

**10.** Procédé selon l'une des revendications précédentes, **caractérisé par le fait que** la grandeur réglante (5) est envoyée à au moins un commutateur de sélection (11).

**11.** Procédé selon la revendication 10, **caractérisé par le fait qu'**on commute la grandeur réglante (9, 10) par l'intermédiaire du commutateur de sélection (11) sur une valeur maximale ou minimale (12, 13).

**12.** Procédé selon l'une des revendications précédentes, **caractérisé par le fait qu'**on utilise éventuellement aussi comme grandeur réglée (3) une valeur mesurée acquise (14) d'un transmetteur de position de vanne.

**13.** Procédé selon l'une des revendications précédentes, **caractérisé par le fait qu'**on utilise une valeur mesurée (14) du transmetteur de position de vanne pour calibrer l'observateur (17).

**14.** Procédé selon l'une des revendications précédentes, **caractérisé par le fait qu'**on met et/ou maintient la vanne de régulation (32) dans la position prescrite par la grandeur de commande (4) par l'intermédiaire d'un dispositif

moteur électro-hydraulique.

FIG 1

EP 1 315 060 B1

FIG 2

UGR  OGR

ZUM
SERVOVENTIL
STELLANTRIEB
USTV

Anzeige

ANPASSUNG

EP 1 315 060 B1

FIG 3